(19) Europäisches Patentamt / European Patent Office / Office européen des brevets

(11) **EP 2 956 276 B1**

(12) **FASCICULE DE BREVET EUROPEEN**

(45) Date de publication et mention de la délivrance du brevet:
**27.11.2019 Bulletin 2019/48**

(21) Numéro de dépôt: **14704111.5**

(22) Date de dépôt: **07.02.2014**

(51) Int Cl.:
***B25J 9/16*** *(2006.01)*          ***G05B 23/02*** *(2006.01)*

(86) Numéro de dépôt international:
**PCT/EP2014/052394**

(87) Numéro de publication internationale:
**WO 2014/124869 (21.08.2014 Gazette 2014/34)**

(54) **PROCEDE DE DETECTION AMELIOREE DE COLLISION D'UN ROBOT AVEC SON ENVIRONNEMENT, SYSTEME ET PRODUIT PROGRAMME D'ORDINATEUR METTANT EN OEUVRE LE PROCEDE**

VERFAHREN ZUR VERBESSERTEN ERKENNUNG DER KOLLISION EINES ROBOTERS MIT SEINER UMGEBUNG, SYSTEM UND COMPUTERPROGRAMMPRODUKT ZUR DURCHFÜHRUNG DIESES VERFAHRENS

METHOD FOR THE IMPROVED DETECTION OF THE COLLISION OF A ROBOT WITH ITS ENVIRONMENT, SYSTEM AND COMPUTER PROGRAM PRODUCT IMPLEMENTING SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2013 FR 1351268**

(43) Date de publication de la demande:
**23.12.2015 Bulletin 2015/52**

(73) Titulaire: **Commissariat à l'Énergie Atomique et aux Énergies Alternatives 75015 Paris (FR)**

(72) Inventeurs:
• **CALDAS, Alex**
  **F-91192 Gif-sur-Yvette Cedex (FR)**
• **MAKAROV, Maria**
  **F-91192 Gif-sur-Yvette Cedex (FR)**
• **GROSSARD, Mathieu**
  **F-91192 Gif-sur-Yvette Cedex (FR)**

(74) Mandataire: **Hammes, Pierre Marks & Clerk France Immeuble Visium 22, avenue Aristide Briand 94117 Arcueil Cedex (FR)**

(56) Documents cités:
**US-A1- 2010 241 293**

• **FRANK P M ET AL: "SURVEY OF ROBUST RESIDUAL GENERATION AND EVALUATION METHODS IN OBSERVER-BASED FAULT DETECTION SYSTEMS", JOURNAL OF PROCESS CONTROL, OXFORD, GB, vol. 7, no. 6, 1 décembre 1997 (1997-12-01), pages 403-424, XP009058184, ISSN: 0959-1524, DOI: 10.1016/S0959-1524(97)00016-4**
• **VAHID SOTOUDEHNEJAD ET AL: "Counteracting modeling errors for sensitive observer-based manipulator collision detection", INTELLIGENT ROBOTS AND SYSTEMS (IROS), 2012 IEEE/RSJ INTERNATIONAL CONFERENCE ON, IEEE, 7 octobre 2012 (2012-10-07), pages 4315-4320, XP032288044, DOI: 10.1109/IROS.2012.6386198 ISBN: 978-1-4673-1737-5**

**Description**

L'invention concerne le domaine des robots et des systèmes de contrôle associés. Plus précisément, l'invention a pour objet un procédé de détection des collisions d'un robot avec son environnement.

L'invention s'applique avantageusement à tout type de robot manipulateur, en particulier des robots manipulateurs sériels mais également des robots manipulateur à structure arborescente ou à structure cinématique fermée.

Ces dernières années, de nombreuses architectures de robots légers ont été proposées. Cette nouvelle génération de robot a pour but avoué d'interagir avec des opérateurs humains lors de la réalisation d'une tâche. Le robot et l'opérateur partagent donc le même espace de travail, et ceci implique de nouvelles problématiques portant sur la sécurité de l'opérateur. En effet, des mouvements à grande dynamique du robot peuvent notamment limiter la zone d'accès rapprochée du robot.

Une problématique générale concernant les robots manipulateurs porte sur la détection de collisions entre le robot et son environnement. En effet, dans le but d'améliorer la sûreté de fonctionnement du robot, il est important de pouvoir détecter rapidement des collisions entre le robot et son environnement afin de minimiser les dommages éventuels en appliquant des stratégies post-impact adaptées.

Les algorithmes connus de détection de collision sont le plus souvent basés sur la comparaison de mesures avec un modèle, permettant de créer un signal appelé « résidu » et qui constitue une image de la collision. La modélisation mathématique du système n'étant jamais parfaitement représentative du comportement réel du robot, le résidu est entaché d'erreurs, et les stratégies de détection doivent imposer l'utilisation de marges de sécurité (matérialisées dans la pratique par des seuils) afin d'être robustes vis-à-vis de ces erreurs. Cela évite l'occurrence de fausses alertes. Mais du fait de ces marges conservatives, le robot perd sa sensibilité aux collisions. L'article FRANK P M ET AL: "SURVEY OF ROBUST RESIDUAL GENERATION AND EVALUATION METHODS IN OBSERVER-BASED FAULT DETECTION SYSTEMS",JOURNAL OF PROCESS CONTROL, OXFORD, GB, vol. 7, n. 6, 1 décembre 1997 (1997-12-01), pages 403-424, présente des développements récents des théories de diagnostic de défaillance.

La présente invention vise ainsi à améliorer les méthodes de détection de collision basées sur la génération et l'évaluation d'un résidu en supprimant ou limitant l'impact des erreurs de modélisation du système. L'invention est définie par les revendications.

Comme cela sera développé par la suite, les méthodes de détection de collision entre un robot et son environnement sont généralement conçus selon une approche en deux étapes : une première étape de génération du résidu, terme qui contient l'information associée au phénomène de collision, et une seconde étape d'évaluation de ce résidu qui consiste notamment à prendre une décision sur l'occurrence d'une collision en fonction de la valeur du résidu.

Concernant la première étape de génération du résidu, plusieurs approches sont inspirées du domaine scientifique de l'automatique. On peut notamment citer le document [1] qui exploite un filtre estimateur de Kalman, dont la grandeur estimée est utilisée comme résidu. Le document [2] décrit une approche plus spécifique qui est issue de la détection de faute. L'article [3] décrit un procédé d'observation de diagnostic utilisé sur un bras de robot afin de générer le résidu. Dans le domaine de la robotique, la stratégie de génération de résidu la plus utilisée consiste à comparer une mesure des couples articulaires $\tau$ avec leur estimation $\hat{\tau}$ déduite à partir du modèle dynamique inverse du robot. Cette technique a été améliorée en utilisant l'équation du moment généralisé d'un robot dans les articles [4] et [5], ce qui évite le calcul en ligne de l'accélération et réduit l'influence des bruits de mesures. Une autre stratégie décrite dans [6], basée sur le filtrage du couple, permet d'éviter le calcul de l'accélération. Toutes ces méthodes sont basées sur un modèle du robot, et ceci implique donc une sensibilité aux erreurs de modélisation.

Concernant la seconde étape de détection de collision, l'évaluation du résidu permet de prendre en compte les incertitudes du modèle. Elle consiste à vérifier que le résidu est en dessous d'un certain seuil. Si le résidu dépasse ce seuil, l'algorithme détecte la collision. Ce seuil permet d'établir une marge afin de rendre la méthode insensible aux erreurs de modélisation et d'éviter les fausses alertes. La technique la plus simple, décrite par exemple dans le document [5], consiste à comparer le résidu avec un seuil constant ou statique, qui représente donc l'erreur de modélisation maximum. Cette méthode réduit considérablement la sensibilité du robot à une collision car un seuil statique ne permet pas de discriminer les variations du résidu liées aux erreurs de modélisation.

Des stratégies plus évoluées utilisent des seuils dynamiques, dont le niveau est adapté en ligne. On peut citer l'article [3] dans lequel un seuil adaptatif est généré à l'aide de techniques fondées sur la logique floue. Cette solution est assez complexe à mettre en place, car elle nécessite un recueil de données afin de développer les lois de logique floue. Dans les articles [6] et [7], plusieurs seuils dynamiques sont proposés, prenant en compte les incertitudes paramétriques. Ces solutions sont uniquement basées sur le modèle dynamique inverse du robot qui, même si les paramètres du modèle sont parfaitement estimés, ne constitue pas une modélisation suffisante. En effet, il ne prend pas en compte certains phénomènes physiques propres aux robots manipulateurs, en particulier les robots sériels légers, tels que les phénomènes de flexibilités.

L'invention propose un procédé de détection de collisions qui prend en compte les erreurs de modélisation du résidu et permet de résoudre les limitations des solutions connues exposées ci-dessus. Les erreurs de modélisation, qui comprennent à la fois des incertitudes liées au paramètres du modèle du robot mais aussi les incertitudes non paramétriques liées à des facteurs extérieurs au modèle choisi, sont identifiées et filtrées afin de générer un résidu filtré. Un seuil dynamique est déterminé en ligne pour adapter le critère de détection aux incertitudes liées aux erreurs de modélisation.

L'application du procédé selon l'invention permet de conserver une bonne sensibilité aux collisions tout en diminuant les phénomènes de fausse alarme liés aux erreurs de modélisation du modèle dynamique inverse utilisé pour générer le résidu.

Les performances du procédé selon l'invention sont notamment améliorées pour des robots soumis à des dynamiques fortes en vitesse ou accélération.

L'invention a pour objet un procédé de détection de collision entre un robot composé d'une pluralité de corps reliés entre eux par au moins une articulation et son environnement ledit procédé comprenant les étapes suivantes :

- Générer, à partir d'un modèle dynamique du robot, un signal représentatif des collisions entre le robot et son environnement, ledit signal étant appelé résidu r et comprenant autant de composantes que d'articulations du robot,

ledit procédé étant caractérisé en ce qu'il comporte en outre les étapes suivantes :

- Réaliser un filtrage passe-haut adaptatif du résidu r pour rendre le résidu indépendant d'incertitudes paramétriques ou non paramétriques liées à des phénomènes basses-fréquences,
- Déterminer de façon récursive un seuil adaptatif T composé d'au moins un premier terme $T_{\Delta 1}$, dynamique, égal à une information sur les incertitudes paramétriques entre ledit modèle et le comportement réel du robot, lesdites incertitudes paramétriques étant liées à une première variable $e_i$ caractéristique de l'état dudit robot parmi les variables suivantes : la position, la vitesse ou l'accélération d'une articulation du robot, ou une fonction linéaire ou non linéaire de l'une de ces variables ou d'une combinaison de ces variables,
- Comparer le résidu filtré au seuil adaptatif T pour en déduire l'existence ou non d'une collision.

Selon un aspect particulier de l'invention, ledit seuil adaptatif T est composé de la somme de plusieurs termes $T_{\Delta 1}$, $T_{\Delta 2}$, $T_{\Delta 3}$, dynamiques, chacun égaux à une information sur les incertitudes paramétriques entre ledit modèle et le comportement réel du robot, lesdites incertitudes paramétriques étant liées à une variable différente, caractéristique de l'état dudit robot parmi les variables suivantes : la position, la vitesse ou l'accélération d'un point fixe du robot, ou une fonction linéaire ou non linéaire de l'une de ces variables ou d'une combinaison de ces variables.

Selon un autre aspect particulier de l'invention, ledit seuil adaptatif T comporte en outre un terme $T_{static}$ statique configuré de sorte à être supérieur à un niveau de bruit de mesure.

Selon un autre aspect particulier de l'invention, l'étape de filtrage est réalisée au moyen d'un algorithme des moindres carrés récursifs.

Cette étape de filtrage peut comporter les sous-étapes suivantes :

- Estimer, de façon récursive, les coefficients de la fonction de transfert du filtre passe-haut $G_0^{-1}$,
- Filtrer le résidu r avec le filtre passe-haut estimé.

Selon un autre aspect particulier de l'invention, une étape supplémentaire de filtrage temporel est appliquée au résidu filtré pour chacune de ses composantes. L'étape supplémentaire de filtrage temporel peut être une étape de calcul de moyenne quadratique.

Selon un autre aspect particulier de l'invention, l'étape de détermination d'au moins un premier terme $T_{\Delta 1}$, $T_{\Delta 2}$, $T_{\Delta 3}$, dynamique du seuil adaptatif T est réalisée au moyen d'un algorithme des moindres carrés récursifs.

L'étape de détermination d'au moins un premier terme $T_{\Delta 1}$, $T_{\Delta 2}$, $T_{\Delta 3}$, dynamique du seuil adaptatif T peut comporter les sous-étapes suivantes :

- Estimer, de façon récursive, les coefficients de la fonction de transfert $\Delta_i$ modélisant les incertitudes paramétriques liées à ladite première variable $e_i$ caractéristique de l'état dudit robot,
- Filtrer ladite première variable $e_i$ caractéristique de l'état dudit robot avec un filtre de fonction de transfert $\Delta_i$ estimée à l'étape précédente pour obtenir un terme $T_{\Delta 1}$, $T_{\Delta 2}$, $T_{\Delta 3}$, dynamique du seuil adaptatif T.

Selon un autre aspect particulier de l'invention, une étape supplémentaire de filtrage temporel est appliquée audit terme $T_{\Delta 1}$, $T_{\Delta 2}$, $T_{\Delta 3}$, dynamique du seuil adaptatif T pour chacune de ses composantes.

L'étape supplémentaire de filtrage temporel peut être une étape de calcul de moyenne quadratique.

Selon un autre aspect particulier de l'invention, l'étape de comparaison du résidu filtré au seuil adaptatif T pour en déduire l'existence ou non d'une collision comprend les sous-étapes suivantes :

- Comparer, pour chaque composante articulaire, le résidu filtré au seuil adaptatif T,
- Conclure à l'existence d'une collision si, pour au moins K composantes, le résidu filtré est supérieur au seuil adaptatif T, K étant un nombre entier prédéterminé strictement positif et inférieur ou égal au nombre d'articulations du robot.

Selon un autre aspect particulier de l'invention, l'étape de génération du résidu est constituée des sous-étapes suivantes :

- Déterminer, à partir d'une information sur l'état du robot et par le biais d'un modèle dynamique, une estimation des couples articulaires du robot,
- Effectuer une mesure de l'état du robot, par exemple une mesure des couples articulaires,
- Calculer le résidu comme la différence entre l'estimation et la mesure de l'état du robot.

Selon un autre aspect particulier de l'invention, les incertitudes paramétriques liées à l'accélération articulaire du robot sont des incertitudes sur la matrice d'inertie du robot.

Selon un autre aspect particulier de l'invention, les incertitudes paramétriques liées à la vitesse articulaire du robot sont des incertitudes sur la matrice des termes centrifuges et de Coriolis du robot et/ou sur les frottements visqueux.

Selon un autre aspect particulier de l'invention, une fonction non linéaire est la fonction signe ou la fonction exponentielle ou la fonction valeur absolue.

Selon un autre aspect particulier de l'invention, les incertitudes paramétriques liées au signe de la vitesse articulaire du robot sont des incertitudes sur les frottements secs.

L'invention a également pour objet un programme d'ordinateur comportant des instructions pour l'exécution du procédé de détection de collision selon l'invention, lorsque le programme est exécuté par un processeur.

L'invention a également pour objet un support d'enregistrement lisible par un processeur sur lequel est enregistré un programme comportant des instructions pour l'exécution du procédé de détection de collision selon l'invention, lorsque le programme est exécuté par un processeur.

L'invention a également pour objet un système de contrôle d'un robot comprenant un organe de commande pour la manipulation du robot, une interface pour l'échange d'informations sur l'état du robot et un module de détection de collisions adapté pour mettre en œuvre le procédé selon l'invention.

D'autres caractéristiques et avantages de la présente invention apparaîtront mieux à la lecture de la description qui suit en relation aux dessins annexés qui représentent :

- La figure 1, un organigramme illustrant les étapes de mise en œuvre du procédé selon l'invention,
- La figure 2, un schéma représentant plus en détail l'étape d'évaluation du résidu,
- La figure 3, un diagramme illustrant l'amélioration de la fiabilité de la décision de détection de collision par application du procédé selon l'invention,
- La figure 4, un schéma d'un système de contrôle d'un robot manipulateur selon l'invention.

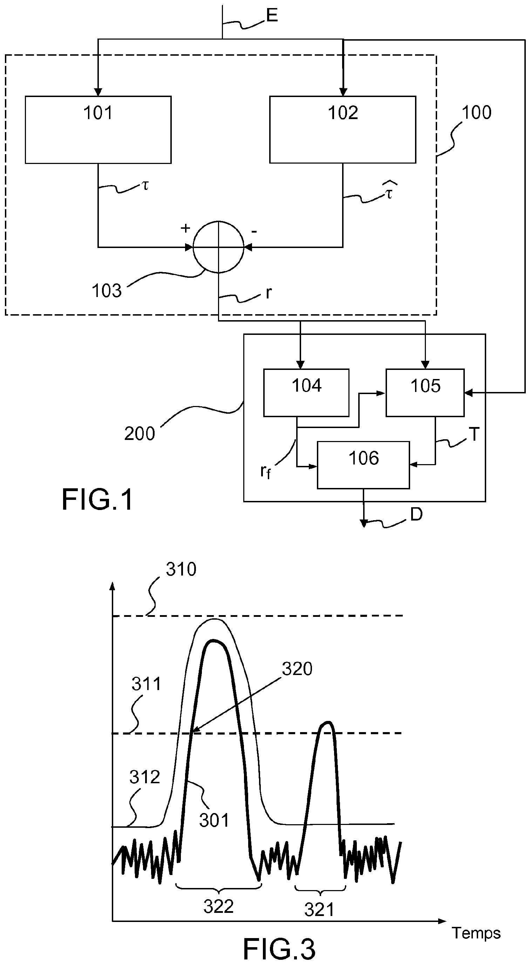

La figure 1 représente, sur un organigramme, les différentes étapes de mise en œuvre du procédé de détection de collisions selon l'invention.

Le procédé selon l'invention reçoit en entrée, une information E sur l'état du robot, à tout instant ou sur un intervalle de temps donné. L'information E sur l'état du robot est constituée de variables d'état du robot. Ces variables peuvent par exemple prendre la forme du triplet $\{q,\dot{q},\ddot{q}\}$ comprenant la position $q$, la vitesse $\dot{q}$ et l'accélération $\ddot{q}$ pour chaque articulation du robot. Comme cela sera explicité plus en détail par la suite, l'information E sur l'état du robot peut également être constituée d'une seule des trois variables d'état précitées ou de deux de ces variables ou encore de toute fonction linéaire ou non linéaire d'une ou de plusieurs de ces trois variables. En particulier mais pas uniquement, les fonctions non linéaires possibles sont la fonction signe, la fonction exponentielle, la fonction valeur absolue ou toute combinaison d'une ou plusieurs de ces fonctions. En outre l'information E sur l'état du robot comprend également une mesure $\tau$ des couples articulaires du robot ou une information permettant de déduire cette mesure, par exemple une mesure du courant moteur sur chaque articulation du robot.

Une première partie 100 du procédé selon l'invention consiste à générer un résidu r qui contient l'information sur les évènements associés à une collision du robot avec son environnement.

Cette première partie 100 comprend une première étape 101 de mesure $\tau$ des couples articulaires du robot, c'est-à-dire des couples mesurés au niveau de chaque articulation du robot. Comme expliqué ci-dessus, cette étape peut, par exemple, être réalisée à partir de mesures des courants moteurs sur chaque articulation.

La première partie 100 du procédé comprend également une deuxième étape 102 de détermination d'un modèle du comportement du robot conduisant à une estimation $\hat{\tau}$ des couples articulaires du robot.

Différents modèles sont possibles et connus de l'Homme du métier. Un exemple particulier d'un modèle dynamique d'un robot sériel rigide est défini par les relations suivantes :

$$\hat{\tau} = \hat{A}(q)\ddot{q} + \bar{H}(q, \dot{q}) + \tau_c \quad (1)$$

avec :

$$\bar{H}(q, \dot{q}) = \hat{C}(q, \dot{q})\dot{q} + \bar{Q}(q) + \hat{\tau}_f \quad (2)$$

$q, \dot{q}, \ddot{q}$ sont les vecteurs des estimations ou mesures respectives des positions, vitesses et accélérations articulaires.
$\hat{\tau}$ est un vecteur des estimées des couples articulaires.
$\tau_c$ est un vecteur des couples de collision. Les forces appliquées sur l'outil terminal du robot peuvent être reflétées au niveau moteur par exemple par le biais de la relation :

$$\tau_c = J(q)^T F_c$$

où $F_c$ est le torseur des forces extérieures appliquées au robot et $J(q)$ est la matrice Jacobienne du robot.
$\hat{A}(q)$ est une estimée de la matrice d'inertie du robot.
$\hat{C}(q, \dot{q})$ est une estimée de la matrice des termes centrifuges et de Coriolis.
$\bar{Q}(q)$ est un vecteur des estimées des couples de gravité.

$\hat{\tau}_f$ est un vecteur des estimées des couples de frottement. Les frottements peuvent, par exemple, être modélisés par un modèle de Coulomb selon la relation suivante :

$$\tau_f = F_v \dot{q} + F_s sign(\dot{q}) \quad (2')$$

où $F_v$ est le coefficient des frottements visqueux et $F_s$ le coefficient des frottements secs, sign() désigne la fonction signe. Le terme $F_v\dot{q}$ représente une estimée des frottements visqueux. Le terme $F_s sign(\dot{q})$ représente une estimée des frottements secs.

L'inconnue dans l'équation (1) est le vecteur des couples de collision, l'étape 102 du procédé selon l'invention consiste donc à estimer le vecteur des couples articulaires selon la relation (3) :

$$\hat{\tau} = \hat{A}(q)\ddot{q} + \bar{H}(q, \dot{q}) \quad (3)$$

Le modèle dynamique du robot présenté ci-dessus est donné à titre d'exemple illustratif mais ne saurait être interprété comme limitatif de la portée de l'invention. En effet, d'autres modèles peuvent être utilisés, par exemple, un modèle similaire à celui de l'équation (1) dans lequel l'un des deux termes $A(q)\ddot{q}$ ou $H(q,\dot{q})$ est ignoré. De façon générale une estimée d'un couple articulaire du robot est composée d'au moins un terme quelconque parmi les termes suivants : un terme dépendant de l'accélération articulaire, un terme dépendant de la vitesse articulaire, un terme dépendant de la position articulaire, un terme dépendant d'une fonction linéaire ou non linéaire de l'un quelconque des trois termes précédents ou d'une combinaison de ces termes, par exemple la fonction signe, la fonction exponentielle ou la fonction valeur absolue.

La première partie 100 du procédé selon l'invention comporte en outre une troisième étape 103 de génération du résidu r par le calcul de la différence entre la mesure des couples articulaires produite par la première étape 101 et l'estimée des couples articulaires produite par la deuxième étape 102 : $r = \tau - \hat{\tau}$.

Toute méthode connue de l'Homme du métier, alternative à celle décrite ci-dessus pour la première partie 100 du procédé selon l'invention, peut être utilisée en remplacement dans la mesure où elle permet d'obtenir un résidu, c'est-à-dire un signal représentatif d'une collision entre le robot et son environnement. Par exemple, le document [5] décrit une méthode de génération du résidu basée sur la comparaison de quantités de mouvement et non des couples articulaires. Cette méthode peut être utilisée en remplacement de la première partie 100 du procédé selon l'invention.

A partir des relations (1) et (3), le résidu r peut être exprimé comme la somme des couples de collision $\tau_c$ et d'au moins un terme correspondant aux erreurs de modélisation sur les modèles utilisés pour estimer les couples articulaires. Les erreurs de modélisation comprennent d'une part des incertitudes paramétriques et d'autre part des incertitudes non paramétriques.

Les incertitudes paramétriques sont les erreurs bornées pouvant affecter les paramètres d'un modèle de structure connue, par exemple un modèle représenté par les relations (1) et (2) précitées. Ces erreurs sont dues à l'identification expérimentale ou à la variation intrinsèque des paramètres du modèle en fonction des conditions de fonctionnement, par exemple la variation de la charge utile, la température, le vieillissement.

Les incertitudes non paramétriques regroupent les erreurs qui ne sont pas liées au modèle lui-même mais à d'autres phénomènes tels que les flexibilités du robot ou le modèle de frottement utilisé.

Dans l'exemple donné ci-dessus où l'estimation des couples articulaires est obtenue à l'aide de la relation (3), le résidu r peut être exprimé à l'aide des relations suivantes :

$$r = \tau - \hat{t} = \tau_c + \Delta A(q)\ddot{q} + \Delta H(q,\dot{q}) \quad (4)$$

Avec :

$$\Delta A(q) = A(q) - \tilde{A}(q)$$

$$\Delta H(q,\dot{q}) = H(q,\dot{q}) - \tilde{H}(q,\dot{q})$$

$\Delta A(q)$ et $\Delta H(q,\dot{q})$ sont les erreurs entre les valeurs réelles et les valeurs estimées des termes employés pour modéliser le comportement du robot, dans l'exemple choisi il s'agit de la matrice d'inertie A du robot et du vecteur H définie par la relation (2).

Ces erreurs ont un impact direct sur la valeur du résidu qui ne peut plus être considéré comme strictement égal au vecteur des couples de collisions (pour chaque articulation). En conséquence, même en l'absence de collision, la valeur du résidu n'est pas toujours nulle ce qui pose le problème du critère à appliquer pour évaluer le résidu et produire une décision sur l'occurrence d'une détection.

Un but de l'invention est de réaliser un filtrage du résidu et une élaboration d'un seuil de détection dynamique qui permet de s'affranchir des fluctuations liées aux erreurs entre le modèle dynamique du robot et son comportement réel. Ces traitements sont regroupés dans une seconde partie 200 du procédé selon l'invention qui comporte une étape 104 de filtrage du résidu r pour obtenir un résidu filtré $r_f$, une étape 105 d'élaboration en ligne d'un seuil dynamique T de détection en fonction du résidu r et de l'état du robot E et enfin une étape 106 de comparaison du résidu filtré $r_f$ au seuil de détection T afin d'élaborer une décision D sur la présence ou l'absence de collisions.

Avant de décrire les étapes mises en œuvre dans la seconde partie 200 du procédé selon l'invention, on introduit la modélisation suivante du résidu afin de mieux comprendre le principe à la base de l'invention. Pour cela, on se place dans le domaine des transformées en Z. La relation (5) donne la modélisation du résidu qui sert de base à l'invention.

$$r_m(z) = \tau_c(z) + \sum_{i=1}^{N} S_i(z)e_i(z) + G_0(z)b(z) \quad (5)$$

Le vecteur du modèle du résidu $r_m(z)$ se compose de trois éléments. La première composante est le vecteur des couples de collision $\tau_c(z)$ qui est le signal que l'on cherche à détecter. La deuxième composante $\sum_{i=1}^{N} S_i(z)e_i(z)$ correspond aux erreurs de modélisation, en particulier dues aux incertitudes paramétriques. Les vecteurs $e_i(z)$ représentent les informations sur l'état du robot, à savoir les variables d'état du robot tel que l'accélération, la vitesse, la position ou toute fonction linéaire ou non linéaire de l'une de ces variables ou d'une combinaison de ces variables. La fonction $S_i(z)$ est la fonction de transfert des erreurs de modélisation associées à l'information $e_i(z)$.

Autrement dit, dans l'exemple décrit ci-dessus où le modèle dynamique du robot est conforme à la relation (1), on voit que les incertitudes paramétriques sont fonctions de trois termes distincts, l'accélération articulaire $\ddot{q}$, la vitesse articulaire $\dot{q}$ et le signe de la vitesse articulaire $sign(\dot{q})$. Le modèle issu de la relation (5) s'écrit alors, pour cet exemple particulier :

$$r_m(z) = \tau_c(z) + S_1(z)e_1(z) + S_2(z)e_2(z) + S_3(z)e_3(z) + G_0(z)b(z) \quad (6)$$

Les termes $e_1(z)$, $e_2(z)$, $e_3(z)$ correspondent respectivement aux transformées en Z de l'accélération articulaire $\ddot{q}$, de la vitesse articulaire $\dot{q}$ et du signe de la vitesse articulaire.

La fonction de transfert $S_1(z)$ vise à modéliser les erreurs de modélisation liées aux termes d'accélération dans la relation (4), à savoir le terme $\Delta A(q)\ddot{q}$. Ce terme est particulièrement significatif lorsque le robot est soumis à des trajectoires à fortes dynamiques.

La fonction de transfert $S_2(z)$ vise à modéliser les incertitudes paramétriques liées aux termes de vitesse dans la relation (4), autrement dit les composantes du terme $\Delta H(q,\dot{q})$ qui dépendent de la vitesse articulaire. Ce terme prend en compte les non linéarités dépendant de la vitesse, comme les phénomènes liés aux frottements ainsi que des incertitudes paramétriques sur les vecteurs de Coriolis et centrifuges. En référence aux relations (2) et (2'), on peut voir que les termes dépendant de la vitesse, dans l'expression du modèle dynamique du robot, sont dépendants des estimées utilisées pour la matrice des termes centrifuges et de Coriolis $C(q, \dot{q})$ (relation (2)) et pour les couples de frottement $\tau_f$ (relation (2')).

Enfin la fonction de transfert $S_3(z)$ vise à modéliser les erreurs de modélisation liées aux termes correspondant au signe de la vitesse dans la relation (4) permettant ainsi de tenir compte des incertitudes sur les frottements secs (voir relation (2')).

La troisième composante du modèle du résidu $r_m(z)$, à savoir le terme $G_0(z)b(z)$ représente un vecteur de bruits blancs $b(z)$ filtrés, qui permet de tenir compte du bruit de mesure et de dynamiques non modélisées comme les flexibilités qui peuvent être présentes dans les robots sériels légers. De telles flexibilités sont caractérisées par des modes résonnants en basses fréquences. Dans le modèle proposé, selon l'invention, par les relations (5) et (6), le bruit blanc $b(z)$ impactant le résidu est filtré par un filtre passe-bas $G_0(z)$. Le terme $G_0(z)b(z)$ équivalent à cette opération de filtrage correspond en fait à un bruit dont le spectre fréquentiel est majoritairement situé dans les basses-fréquences. En effet, les bruits de mesure qui impactent le modèle dynamique d'évolution du robot sont généralement liés à des phénomènes basse-fréquence tels que des effets gravitationnels ou des flexibilités basses fréquences. Ces erreurs entrent dans la catégorie des incertitudes non paramétriques évoquées précédemment. Au contraire, les phénomènes de collision se traduisent généralement par des fréquences couvrant un large spectre et plus le contact, lors de la collision, est caractérisé par une interaction de grande raideur avec l'environnement, plus le signal résultant comporte des composantes haute-fréquences. Un objectif du procédé selon l'invention consiste donc à distinguer les composantes hautes fréquences, caractéristiques d'une collision, des composantes basses fréquences, caractéristiques de bruits de mesure.

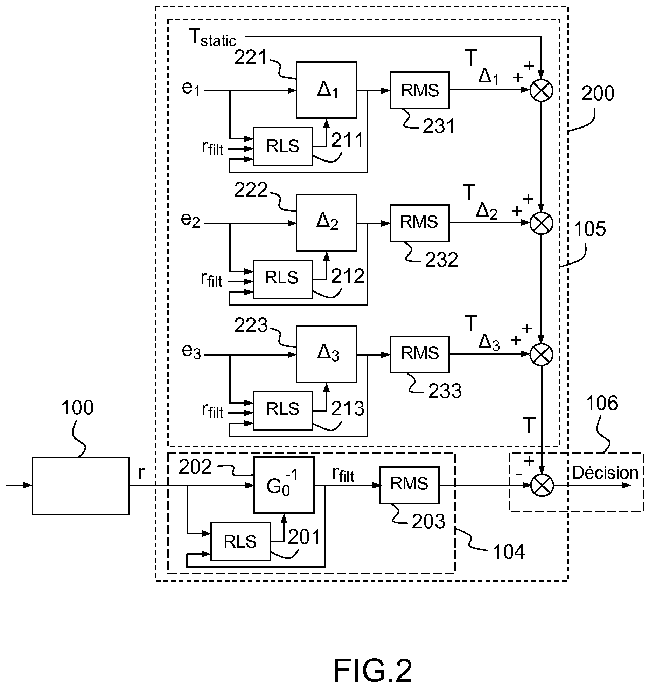

La figure 2 représente, plus en détail, les traitements mis en œuvre dans la seconde partie 200 du procédé.

Dans la première étape 104 de la seconde partie 200 du procédé, le résidu r, obtenu à l'issu de la première partie 100 du procédé, est filtré par un filtre passe-haut $G_0^{-1}(z)$ afin de rendre le résidu indépendant des incertitudes non paramétriques liées aux phénomènes basse-fréquence comme explicité ci-dessus. La fonction de transfert du filtre passe-haut est, à titre illustratif, représentée par le terme $G_0^{-1}(z)$ qui est l'inverse du filtre passe-bas $G_0(z)$ utilisé dans le modèle du résidu selon les relations (5) et (6). En pratique les coefficients du filtre passe-haut utilisé sont déterminés à l'aide d'un algorithme adaptatif, basé, par exemple, sur le modèle connu des moindres carrés récursifs ou « recursive least squares » (RLS) en anglais. La fonction réalisée par un tel algorithme consiste à calculer les coefficients de la fonction de transfert visée, ici le filtre passe-haut, en tenant compte des mesures passées et du jeu de coefficients calculé à l'instant précédent.

Le filtrage adaptatif du résidu est représenté à la figure 2 par la boite 201 qui correspond à l'apprentissage des coefficients du filtre et à la boite 202 qui correspond au filtrage lui-même réalisé sur le résidu r afin de produire en sortie un résidu filtré $r_f$. Le résidu filtré obtenu est un vecteur dont les composantes sont les résidus filtrés respectifs correspondant à chaque articulation du robot, étant entendu que le robot comporte au moins une articulation.

Optionnellement, un module de filtrage 203 supplémentaire peut être ajouté. Ce module opère un filtrage temporel de chaque composante du vecteur des résidus filtré $r_f$ pour éliminer le bruit pouvant résulter d'une dérivation numérique. Le module de filtrage 203 peut, par exemple, être réalisé par un calcul de moyenne quadratique ou « root mean square » en anglais. Alternativement, le module de filtrage 203 peut être remplacé par la fonction valeur absolue.

On décrit à présent plus en détail un exemple de réalisation du filtrage adaptatif du résidu r par le biais d'une méthode des moindres carrés récursifs (RLS).

On rappelle tout d'abord les équations bien connues de mise en œuvre de l'algorithme RLS.

Soit $\theta_k$ le vecteur des paramètres à estimer, dans le cas présent il s'agit du vecteur des coefficients du filtre $G_0^{-1}$ qui est appris en temps réel. Un paramètre de l'algorithme RLS est l'ordre des numérateurs et des dénominateurs de la fonction de transfert à estimer, ici $G_0^{-1}(z)$. Plus l'ordre de la fonction de transfert est grand, plus son pouvoir descriptif est grand et meilleure est la précision de représentation des résultats. En revanche, cela se fait au détriment du temps de calcul qui peut devenir prohibitif. Le choix de l'ordre est donc un compromis entre précision du modèle et temps de calcul.

Soit $\Phi_k$ le vecteur des mesures d'entrées, dans le cas présent il s'agit des mesures successives passées du résidu r.

Les équations de l'algorithme RLS peuvent s'écrire de la façon suivante :

$$F_k = \frac{1}{\lambda}\left(F_{k-1} + \frac{F_{k-1}\phi_{k-1}\phi_{k-1}^T F_{k-1}}{\lambda + \phi_{k-1}^T F_{k-1}\phi_{k-1}}\right) \quad (7)$$

$$\varepsilon_k = y_k - \theta_{k-1}\phi_{k-1} \quad (8)$$

$$\theta_k = \theta_{k-1} + F_k\phi_{k-1}\varepsilon_k \quad (9)$$

$F_k$ est la matrice de covariance de la grandeur d'entrée de l'algorithme (ici le résidu r). À est le paramètre de facteur d'oubli.

$Y_k$ est la grandeur d'entrée de l'algorithme, égale au résidu $r_k$ dans le cas présent.

$\varepsilon_k$ est l'erreur de prédiction qui correspond au critère à minimiser. Dans le cas présent, on cherche à minimiser la différence entre la valeur courante $r_k$ du résidu, produite en entrée de l'algorithme, et le résultat du filtrage, par la fonction de transfert aux coefficients estimés $\theta_{k-1}$, des valeurs passées du résidu. L'indice k représente l'indice de la valeur courante d'une grandeur, les indices k-i représentent les indices des valeurs passées d'une grandeur.

Pour cela, on pose

$$y_k = r_k$$

$$\phi_k = \left[r_{k-1} \ldots r_{k-n_{G_0}}\right]^T$$

Le résidu filtré est calculé à l'aide de la relation suivante : $r_{filt} = r_k - \theta_{G0}^T\phi_k$, où $\theta_{G0}^T$ désigne le vecteur transposé des coefficients estimés de la fonction de transfert du filtre $G_0^{-1}$ et $\Phi_k$ le vecteur des valeurs passées du résidu $r_k$.

Les équations (7),(8),(9) données ci-dessus le sont à titre illustratif pour expliciter une mise en œuvre possible de l'estimation des coefficients du filtre $G_0^{-1}$. Ces équations ne doivent pas être interprétées comme limitatives, étant entendu que l'Homme du métier sait implémenter tout autre algorithme adaptatif ou toute variante d'implémentation de l'algorithme adaptatif RLS pour arriver au même résultat visé par la présente invention.

Dans la deuxième étape 105 de la seconde partie 200 du procédé, un seuil de détection de collision dynamique T est déterminé en ligne, c'est-à-dire au fur et à mesure du déplacement du robot.

Le seuil dynamique T est calculé afin de prendre en compte les différentes erreurs de modélisation affectant le modèle dynamique du robot, telles que décrites ci-dessus, en particulier les incertitudes paramétriques et non paramétriques.

Dans l'exemple de la figure 2, le modèle utilisé est du type de celui de la relation (1), autrement dit il est constitué essentiellement de composantes dépendantes de l'accélération articulaire (représentée par la grandeur $e_1(z)$), de la vitesse articulaire (représentée par la grandeur $e_2(z)$) et du signe de la vitesse articulaire (représenté par la grandeur $e_3(z)$).

En reprenant la relation (6) et en multipliant chaque membre par la fonction de transfert du filtre passe-haut $G_0^{-1}(z)$, on obtient un modèle du résidu filtré :

$$r_f(z) = G_0^{-1}(z)\tau_c(z) + \Delta_1(z)e_1(z) + \Delta_2(z)e_2(z) + \Delta_3(z)e_3(z) + b(z) \quad (7)$$

Avec $\Delta_i(z) = G_0^{-1}(z)S_i(z)$

Selon le modèle de la relation (7), le résidu filtré est donc composé de trois éléments:

- le vecteur des couples de collision filtré, qui représente le signal à détecter ;
- les erreurs de modélisation dépendant des signaux $e_i(z)$ du système ;
- un vecteur de bruits blancs.

Un objectif de la deuxième étape 105 de la seconde partie 200 du procédé selon l'invention consiste à estimer en ligne les fonctions de transfert $\Delta_i(z)$, pour chaque variable d'entrée $e_i(z)$, et à filtrer cette variable par un filtre reproduisant cette fonction de transfert. Les coefficients de la fonction de transfert $\Delta_i(z)$ sont estimés de façon récursive de façon à produire des coefficients non stationnaires.

Pour cela, une méthode possible consiste à utiliser, tout comme pour le filtrage du résidu, un algorithme adaptatif du type moindres carrés récursifs (RLS). Toute autre méthode de l'état de l'art permettant une estimation récursive des coefficients est envisageable, en particulier un algorithme heuristique, un algorithme génétique, un filtre particulier, une méthode du gradient ou toute méthode d'optimisation équivalente.

En reprenant les équations (7),(8) et (9) données ci-dessus, on applique de la même façon que pour le filtrage du résidu, l'algorithme RLS avec les paramètres suivants pour chacune des variables d'entrée $e_i(z)$.

La grandeur d'entrée de l'algorithme $Y_k$ est égale au résidu filtré $r_{fk}$.

$\theta_k$ est le vecteur des coefficients de la fonction de transfert $\Delta_i(z)$ à estimer.

$\Phi_k$ est une matrice qui contient, pour chaque articulation du robot, un vecteur de la composante courante et des composantes passées (sur un horizon donné dépendant de l'ordre de la fonction de transfert choisi) de la variable d'entrée $e_i(z)$, par exemple l'accélération articulaire ou la vitesse articulaire. $\Phi_k$ contient également les valeurs passées du seuil dynamique $T_{\Delta i}$. L'erreur de prédiction $\varepsilon_k$ que l'on cherche à minimiser est l'erreur entre la valeur courante du résidu filtré et le résultat du filtrage de la variable d'entrée $e_i$ par l'estimée de la fonction de transfert $\Delta_i(z)$.

La valeur courante du seuil dynamique $T_{\Delta i}(k)$ est calculée à l'aide de la relation suivante $T_{\Delta i}(k) = \theta^T_k \phi_k$, avec $\theta_k$ l'estimée des coefficients du filtre $\Delta_i(z)$ calculée à l'aide de la relation (9).

L'algorithme adaptatif est donc appliqué pour chaque variable d'entrée $e_i(z)$ et consiste comme expliqué ci-dessus en une première partie 211,212,213 qui correspond à l'apprentissage des coefficients de la fonction de transfert du filtre $\Delta_i(z)$ et à une seconde partie 221,222,223 qui correspond au filtrage lui-même réalisé sur la variable d'entrée $e_i(z)$ afin d'obtenir une composante $T_{\Delta i}$ du seuil dynamique.

En sortie de l'algorithme adaptatif, la composante $T_{\Delta i}$ est une grandeur vectorielle qui contient les composantes associées aux différentes articulations du robot.

Comme déjà explicité ci-dessus, optionnellement, un module de filtrage temporel supplémentaire 231,232,233 peut être ajouté pour éliminer des bruits résiduels dans les composantes $T_{\Delta i}$. Ces modules de filtrage 231,232,233 peuvent, par exemple, être réalisés par un calcul de moyenne quadratique ou « root mean square » en anglais. Alternativement, ils peuvent être remplacés par la fonction valeur absolue.

In fine, le seuil dynamique T global est obtenu en sommant les composantes $T_{\Delta i}$ obtenues pour chaque variable d'entrée $e_i(z)$ et en ajoutant une composante statique $T_{static}$ dont la valeur est réglée en fonction du niveau de bruit.

Dans l'exemple de la figure 2 qui porte sur trois variables d'entrée, le seuil dynamique global obtenu par application de l'invention est donné par la relation suivante :

$$\mathbb{T} = T_{static} + T_{\Delta_1} + T_{\Delta_2} + T_{\Delta_3}$$

La dernière étape 106 du procédé selon l'invention consiste à comparer le résidu filtré $r_f$ en sortie de l'étape 104 avec le seuil dynamique global T et en déduire l'existence d'une collision si le résidu filtré dépasse ledit seuil. Cette comparaison peut être effectuée pour chaque composante du seuil T correspondant à chaque articulation du robot. Une collision peut être détectée si le résidu filtré dépasse le seuil dynamique T pour au moins une articulation. D'autres variantes de réalisation de l'étape 106 finale de détection sont possibles comme le déclenchement d'une alerte de détection seulement si un nombre K prédéterminé parmi les N articulations du robot considérés satisfait au critère de comparaison entre le résidu filtré et le seuil dynamique T. Toute autre variante de réalisation permettant d'élaborer une décision sur l'occurrence d'une collision en fonction de la comparaison du vecteur des résidus filtrés et du vecteur des seuils dynamiques T est envisageable et sera comprise par l'Homme du métier comme faisant partie à part entière de l'invention.

La figure 3 illustre, sur un diagramme représentant l'évolution du résidu filtré $r_f$ obtenu par application du procédé selon l'invention en fonction du temps, l'apport de l'invention par rapport aux solutions de l'art antérieur.

Sur la figure 3 est représentée l'évolution 301 du résidu filtré en fonction du temps. Pendant une première période de temps 320, le résidu filtré subit une première variation d'amplitude liée aux erreurs de modélisation sur le modèle dynamique du robot. Pendant une seconde période de temps 321, le résidu filtré subit une seconde variation d'amplitude liée à une collision avec un objet. Dans le cas des solutions de l'art antérieur qui utilisent un seuil de détection statique, on remarque qu'il n'est jamais possible, avec un même seuil, à la fois de détecter la collision tout en évitant de déclencher une alarme pour des phénomènes liés aux erreurs de modélisation. Si le seuil 310 est trop élevé, il ne permet pas de détecter la collision 321, si le seuil 311 est trop bas, il engendre une fausse détection sur l'événement 320 lié aux erreurs de modélisation.

Sur la figure 3 est également représenté le seuil dynamique 312 obtenu par application du procédé selon l'invention et qui permet à la fois de correctement détecter le phénomène de collision 321 tout en évitant une fausse détection sur le premier évènement 320 source de variation d'amplitude du résidu.

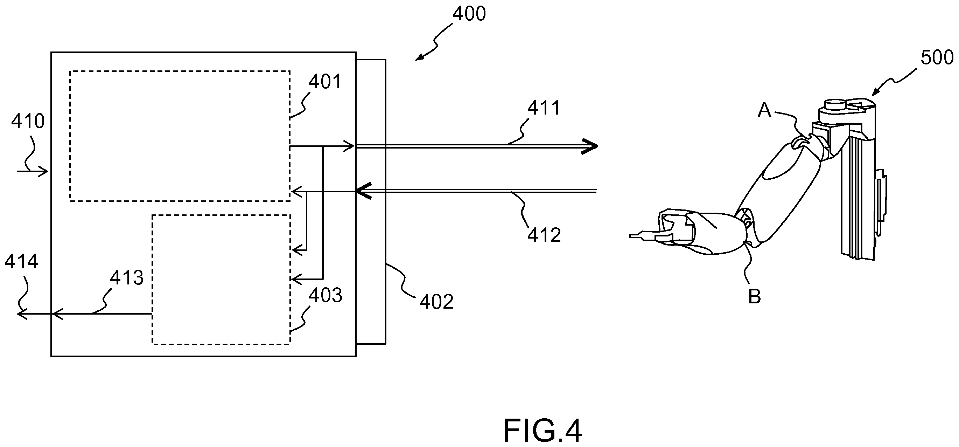

La figure 4 représente un schéma d'un système de contrôle 400 selon l'invention d'un robot manipulateur 500 comprenant une ou plusieurs articulations A,B.

Le système 400 selon l'invention comporte un organe de commande 401 de la trajectoire du bras du robot manipulateur 500, une interface physique 402 d'entrée/sortie entre le système 400 et le robot 500 et un module 403 de détection des collisions.

L'organe de commande 401 reçoit en entrée un ordre de commande haut-niveau 410 pour piloter le robot 500 et transmet en sortie 411, via l'interface 402, des informations au robot 500 pour le manipuler, par exemple un couple de référence. En retour, une mesure 412 des positions et des couples articulaires du robot 500 est fournie au système 400. Cette mesure 412 peut être directement prise égale au couple de référence 411. En effet, dans le cas de moteurs à courants continus, un couple de référence est envoyé aux amplificateurs de puissance pilotant les moteurs du robot et asservis en courant par une boucle de rétroaction interne indépendante du contrôleur principal. Cet asservissement en courant étant très rapide à l'échelle de la dynamique du robot et du temps d'échantillonnage principal, on peut en général supposer que le couple effectivement appliqué au robot est égal au couple de référence. Grâce à cette hypothèse il est donc possible d'utiliser le couple de référence directement comme entrée à l'algorithme de détection, sans avoir besoin de mesurer explicitement le couple articulaire. Alternativement, si le couple de référence 411 n'est pas disponible, par exemple parce que l'organe de commande 401 et le module de détection de collisions 403 sont implémentés dans deux équipements distincts, une mesure 412 des couples articulaires du robot est nécessaire.

Le module de détection de collisions 403 reçoit la mesure 412 des couples articulaires du robot et établi une décision 413 sur la présence ou l'absence de collision. Cette décision 413 est par exemple une décision binaire qui est ensuite fournie à une interface 414 pour être exploitée.

Le module de détection des collisions 403 peut être implémenté à partir d'éléments matériel et/ou logiciel. Il peut notamment être mis en œuvre en tant que programme d'ordinateur comportant des instructions pour son exécution. Le programme d'ordinateur peut être enregistré sur un support d'enregistrement lisible par un processeur.

### *Références*

[1] V. Venkatasubramanian, R. Rengaswamy, K. Yin, and S. N. Kavuri, "A review of process fault détection and diagnosis: Part i: Quantitative model-based methods," Computers Chemical Engineering, pp. 293-311, 2003.

[2] P. Frank and X. Ding, "Survey of robust residual generation and evaluation methods in observer-based fault détection systems," Journal of process control, vol. 7, no. 6, pp. 403-424, 1997.

[3] H. Sneider and P. Frank, "Observer-based supervision and fault détection in robots using nonlinear and fuzzy logic residual évaluation," Control Systems Technology, IEEE Transactions on, vol. 4, no. 3, pp.274-282, 1996.

[4] A. De Luca and R. Mattone, "Actuator failure détection and isolation using generalized momenta," in Robotics and Automation, 2003.Proceedings. ICRA'03. IEEE International Conférence on, vol. 1. IEEE, 2003, pp. 634-639.

[5] S. Haddadin, A. Albu-Schaffer, A. De Luca, and G. Hirzinger, "Collision détection and reaction: A contribution to safe physical humanrobot interaction," in Intelligent Robots and Systems, 2008. IROS 2008.IEEE/RSJ International Conférence on. IEEE, 2008, pp. 3356-3363.

[6] W. Dixon, I. Walker, D. Dawson, and J. Hartranft, "Fault détection for robot manipulators with parametric uncertainty: a prediction-errorbased approach," Robotics and Automation, IEEE Transactions on, vol. 16, no. 6, pp. 689-699, 2000.

[7] A. De Luca and R. Mattone, "An adapt-and-detect actuator fdi scheme for robot manipulators," in Proceedings. ICRA'04. 2004 IEEE International Conférence on, vol. 5. IEEE, 2004, pp. 4975-4980.

## Revendications

**1.** Procédé de détection de collision entre un robot composé d'une pluralité de corps reliés entre eux par au moins une articulation et son environnement ledit procédé comprenant les étapes suivantes :

- Générer (100), à partir d'un modèle dynamique du robot, un signal représentatif des collisions entre le robot et son environnement, ledit signal étant appelé résidu r et comprenant autant de composantes que d'articulations du robot,

ledit procédé étant **caractérisé en ce qu'**il comporte en outre les étapes suivantes :

- Réaliser (104) un filtrage passe-haut adaptatif du résidu r pour rendre le résidu indépendant d'incertitudes paramétriques ou non paramétriques liées à des phénomènes basses-fréquences,

- Déterminer (105), de façon récursive, un seuil adaptatif T composé d'au moins un premier terme $T_{\Delta 1}$, dynamique, égal à une information sur les incertitudes paramétriques entre ledit modèle et le comportement réel du robot, lesdites incertitudes paramétriques étant liées à une première variable $e_i$ caractéristique de l'état dudit robot parmi les variables suivantes : la position, la vitesse ou l'accélération d'une articulation du robot, ou une fonction linéaire ou non linéaire de l'une de ces variables ou d'une combinaison de ces variables,
- Comparer (106) le résidu filtré au seuil adaptatif T pour en déduire l'existence ou non d'une collision.

**2.** Procédé de détection de collision selon la revendication 1 dans lequel ledit seuil adaptatif T est composé de la somme de plusieurs termes $T_{\Delta 1}$, $T_{\Delta 2}$, $T_{\Delta 3}$, dynamiques, chacun égaux à une information sur les incertitudes paramétriques entre ledit modèle et le comportement réel du robot, lesdites incertitudes paramétriques étant liées à une variable différente, caractéristique de l'état dudit robot parmi les variables suivantes : la position, la vitesse ou l'accélération d'un point fixe du robot, ou une fonction linéaire ou non linéaire de l'une de ces variables ou d'une combinaison de ces variables,

**3.** Procédé de détection de collision selon l'une des revendications précédentes dans lequel ledit seuil adaptatif T comporte en outre un terme $T_{static}$ statique configuré de sorte à être supérieur à un niveau de bruit de mesure.

**4.** Procédé de détection de collision selon l'une des revendications précédentes dans lequel l'étape de filtrage (104) est réalisée au moyen d'un algorithme des moindres carrés récursifs.

**5.** Procédé de détection de collision selon la revendication 4 dans lequel l'étape de filtrage (104) comporte les sous-étapes suivantes :

- Estimer (201), de façon récursive, les coefficients de la fonction de transfert du filtre passe-haut $G_0^{-1}$,
- Filtrer (202) le résidu r avec le filtre passe-haut estimé.

**6.** Procédé de détection de collision selon l'une des revendications 4 ou 5 dans lequel une étape supplémentaire de filtrage temporel (203) est appliquée au résidu filtré pour chacune de ses composantes.

**7.** Procédé de détection de collision selon la revendication 6 dans lequel l'étape supplémentaire de filtrage temporel (203) est une étape de calcul de moyenne quadratique (RMS).

**8.** Procédé de détection de collision selon l'une des revendications précédentes dans lequel l'étape de détermination (105) d'au moins un premier terme $T_{\Delta 1}$, $T_{\Delta 2}$, $T_{\Delta 3}$, dynamique du seuil adaptatif T est réalisée au moyen d'un algorithme des moindres carrés récursifs.

**9.** Procédé de détection de collision selon l'une des revendications précédentes dans lequel l'étape de détermination (105) d'au moins un premier terme $T_{\Delta 1}$, $T_{\Delta 2}$, $T_{\Delta 3}$, dynamique du seuil adaptatif T comporte les sous-étapes suivantes :

- Estimer (211,212,213), de façon récursive, les coefficients de la fonction de transfert $\Delta_i$ modélisant les incertitudes paramétriques liées à ladite première variable $e_i$ caractéristique de l'état dudit robot,
- Filtrer (221,222,223) ladite première variable $e_i$ caractéristique de l'état dudit robot avec un filtre de fonction de transfert $\Delta_i$ estimée à l'étape précédente (211,212,213) pour obtenir un terme $T_{\Delta 1}$, $T_{\Delta 2}$, $T_{\Delta 3}$, dynamique du seuil adaptatif T.

**10.** Procédé de détection de collision selon l'une des revendications 8 ou 9 dans lequel une étape supplémentaire de filtrage temporel (231,232,233) est appliquée audit terme $T_{\Delta 1}$, $T_{\Delta 2}$, $T_{\Delta 3}$, dynamique du seuil adaptatif T pour chacune de ses composantes.

**11.** Procédé de détection de collision selon la revendication 10 dans lequel l'étape supplémentaire de filtrage temporel (231,232,233) est une étape de calcul de moyenne quadratique (RMS).

**12.** Procédé de détection de collision selon l'une des revendications précédentes dans lequel l'étape (106) de comparaison du résidu filtré au seuil adaptatif T pour en déduire l'existence ou non d'une collision comprend les sous-étapes suivantes :

- Comparer, pour chaque composante articulaire, le résidu filtré au seuil adaptatif T,
- Conclure à l'existence d'une collision si, pour au moins K composantes, le résidu filtré est supérieur au seuil adaptatif T, K étant un nombre entier prédéterminé strictement positif et inférieur ou égal au nombre d'articulations du robot.

13. Procédé de détection de collision selon l'une des revendications précédentes dans lequel l'étape (100) de génération du résidu est constituée des sous-étapes suivantes :

- Déterminer (101), à partir d'une information sur l'état du robot et par le biais d'un modèle dynamique, une estimation des couples articulaires du robot,
- Effectuer une mesure (102) de l'état du robot, par exemple une mesure des couples articulaires,,
- Calculer (103) le résidu comme la différence entre l'estimation et la mesure de l'état du robot.

14. Procédé de détection de collision selon l'une des revendications précédentes dans lequel les incertitudes paramétriques liées à l'accélération articulaire du robot sont des incertitudes sur la matrice d'inertie du robot.

15. Procédé de détection de collision selon l'une des revendications précédentes dans lequel les incertitudes paramétriques liées à la vitesse articulaire du robot sont des incertitudes sur la matrice des termes centrifuges et de Coriolis du robot et/ou sur les frottements visqueux.

16. Procédé de détection de collision selon l'une des revendications précédentes dans lequel une fonction non linéaire est la fonction signe ou la fonction exponentielle ou la fonction valeur absolue.

17. Procédé de détection de collision selon la revendication 16 dans lequel les incertitudes paramétriques liées au signe de la vitesse articulaire du robot sont des incertitudes sur les frottements secs.

18. Programme d'ordinateur comportant des instructions pour l'exécution du procédé de détection de collision selon l'une quelconque des revendications 1 à 17, lorsque le programme est exécuté par un processeur.

19. Support d'enregistrement lisible par un processeur sur lequel est enregistré un programme comportant des instructions pour l'exécution du procédé de détection de collision selon l'une quelconque des revendications 1 à 17, lorsque le programme est exécuté par un processeur.

20. Système (400) de contrôle d'un robot (500) comprenant un organe de commande (401) pour la manipulation du robot (500), une interface (402) pour l'échange d'informations sur l'état du robot (500) et un module (403) de détection de collisions adapté pour mettre en œuvre le procédé selon l'une des revendications 1 à 17.

**Patentansprüche**

1. Verfahren zur Kollisionserkennung zwischen einem Roboter, welcher aus einer Vielzahl von miteinander durch mindestens ein Gelenk verbundenen Körpern besteht, und seiner Umgebung, wobei das Verfahren die folgenden Schritte beinhaltet:

- Erzeugen (100), anhand eines dynamischen Modells des Roboters, eines Signals, welches Kollisionen zwischen dem Roboter und seiner Umgebung darstellt, wobei das Signal Rest r genannt wird und ebenso viele Komponenten beinhaltet, wie der Roboter Gelenke zählt,

wobei das Verfahren **dadurch gekennzeichnet ist, dass** es zudem die folgenden Schritte beinhaltet:

- Durchführen (104) einer adaptiven Hochpassfilterung des Rests r, um den Rest von parametrischen oder nichtparametrischen Unsicherheiten, welche mit tieffrequenten Phänomenen zusammenhängen, unabhängig zu machen,
- rekursives Bestimmen (105) eines adaptiven Schwellenwertes T, welcher aus mindestens einem ersten dynamischen Term $T_{A1}$ besteht, welcher gleich einer Information über die parametrischen Unsicherheiten zwischen dem Modell und dem tatsächlichen Verhalten des Roboters ist, wobei die parametrischen Unsicherheiten mit einer ersten Variable $e_i$ verbunden sind, welche für den Zustand des Roboters charakteristisch ist, und zwar aus den folgenden Variablen: der Position, der Geschwindigkeit oder der Beschleunigung eines Gelenks des Roboters, oder einer linearen oder nichtlinearen Funktion einer dieser Variablen oder einer Kombination dieser Variablen,

- Vergleichen (106) des gefilterten Rests mit dem adaptiven Schwellenwert T, um hieraus das Vorliegen oder Nichtvorliegen einer Kollision abzuleiten.

2. Verfahren zur Kollisionserkennung nach Anspruch 1, bei welchem der adaptive Schwellenwert T aus der Summe mehrerer dynamischer Terme $T_{\Delta 1}$, $T_{\Delta 2}$, $T_{\Delta 3}$ besteht, welche jeweils gleich einer Information über die parametrischen Unsicherheiten zwischen dem Modell und dem tatsächlichen Verhalten des Roboters sind, wobei die parametrischen Unsicherheiten mit einer unterschiedlichen Variable verbunden sind, welche für den Zustand des Roboters charakteristisch ist, und zwar aus den folgenden Variablen: der Position, der Geschwindigkeit oder der Beschleunigung eines Fixpunktes des Roboters, oder einer linearen oder nichtlinearen Funktion einer dieser Variablen oder einer Kombination dieser Variablen,

3. Verfahren zur Kollisionserkennung nach einem der vorhergehenden Ansprüche, bei welchem der adaptive Schwellenwert T zudem einen statischen Term $T_{static}$ beinhaltet, welcher so konfiguriert ist, dass er größer als ein Messrauschpegel ist.

4. Verfahren zur Kollisionserkennung nach einem der vorhergehenden Ansprüche, bei welchem der Schritt des Filterns (104) mithilfe eines rekursive-kleinste-Quadrate-Algorithmus erfolgt.

5. Verfahren zur Kollisionserkennung nach Anspruch 4, bei welchem der Schritt des Filterns (104) die folgenden Unterschritte beinhaltet:

   - rekursives Schätzen (201) der Koeffizienten der Übertragungsfunktion des Hochpassfilters $G_0^{-1}$,
   - Filtern (202) des Rests r mit dem geschätzten Hochpassfilter.

6. Verfahren zur Kollisionserkennung nach einem der Ansprüche 4 oder 5, bei welchem ein zusätzlicher Schritt des zeitlichen Filterns (203) auf den gefilterten Rest für jede seiner Komponenten angewandt wird.

7. Verfahren zur Kollisionserkennung nach Anspruch 6, bei welchem der zusätzliche Schritt des zeitlichen Filterns (203) ein Schritt des Berechnens des quadratischen Mittelwertes (RMS) ist.

8. Verfahren zur Kollisionserkennung nach einem der vorhergehenden Ansprüche, bei welchem der Schritt des Bestimmens (105) mindestens eines ersten dynamischen Terms $T_{\Delta 1}$, $T_{\Delta 2}$, $T_{\Delta 3}$ des adaptiven Schwellenwertes T mithilfe eines rekursive-kleinste-Quadrate-Algorithmus erfolgt.

9. Verfahren zur Kollisionserkennung nach einem der vorhergehenden Ansprüche, bei welchem der Schritt des Bestimmens (105) mindestens eines ersten dynamischen Terms $T_{\Delta 1}$, $T_{\Delta 2}$, $T_{\Delta 3}$ des adaptiven Schwellenwertes T die folgenden Unterschritte beinhaltet:

   - rekursives Schätzen (211, 212, 213) der Koeffizienten der Übertragungsfunktion $\Delta_i$, welche die parametrischen Unsicherheiten modelliert, die mit der ersten Variable $e_i$ verbunden sind, welche für den Zustand des Roboters charakteristisch ist.
   - Filtern (221, 222, 223) der ersten Variable $e_i$, welche charakteristisch für den Zustand des Roboters ist, mit einem Filter mit der im vorherigen Schritt (211, 212, 213) geschätzten Übertragungsfunktion $\Delta_i$ zum Erzielen eines dynamischen Terms $T_{\Delta 1}$, $T_{\Delta 2}$, $T_{\Delta 3}$ des adaptiven Schwellenwertes T.

10. Verfahren zur Kollisionserkennung nach einem der Ansprüche 8 oder 9, bei welchem ein zusätzlicher Schritt des zeitlichen Filterns (231, 232, 233) auf den dynamischen Term $T_{\Delta 1}$, $T_{\Delta 2}$, $T_{\Delta 3}3$ des adaptiven Schwellenwertes T für jede seiner Komponenten angewandt wird.

11. Verfahren zur Kollisionserkennung nach Anspruch 10, bei welchem der zusätzliche Schritt des zeitlichen Filterns (231, 232, 233) ein Schritt des Berechnens des quadratischen Mittelwertes (RMS) ist.

12. Verfahren zur Kollisionserkennung nach einem der vorhergehenden Ansprüche, bei welchem der Schritt des Vergleichens (106) des gefilterten Rests mit dem adaptiven Schwellenwert T, um daraus das Vorliegen oder Nichtvorliegen einer Kollision abzuleiten, die folgenden Unterschritte beinhaltet:

   - Vergleichen, für jede Gelenkskomponente, des gefiltertes Rests mit dem adaptiven Schwellenwert T,
   - Schließen auf das Vorliegen einer Kollision, wenn, für mindestens K Komponenten, der gefilterte Rest größer als der adaptive Schwellenwert T ist, wobei K eine vorbestimmte Ganzzahl ist, welche strikt positiv und kleiner als die oder gleich der Anzahl der Gelenke des Roboters ist.

13. Verfahren zur Kollisionserkennung nach einem der vorhergehenden Ansprüche, bei welchem der Schritt (100) des Erzeugens des Rests aus folgenden Unterschritten besteht:

- Bestimmen (101), anhand einer Information über den Zustand des Roboters und mittels eines dynamischen Modells, einer Schätzung der Gelenkmomente des Roboters,
- Vornehmen einer Messung (102) des Zustandes des Roboters, beispielsweise einer Messung der Gelenkmomente,
- Berechnen (103) des Rests als die Differenz zwischen der Schätzung und der Messung des Zustandes des Roboters.

14. Verfahren zur Kollisionserkennung nach einem der vorhergehenden Ansprüche, bei welchem die parametrischen Unsicherheiten, welche mit der Gelenksbeschleunigung des Roboters verbunden sind, Unsicherheiten in Bezug auf die Trägheitsmatrix des Roboters sind.

15. Verfahren zur Kollisionserkennung nach einem der vorhergehenden Ansprüche, bei welchem die parametrischen Unsicherheiten, welche mit der Gelenksgeschwindigkeit des Roboters verbunden sind, Unsicherheiten in Bezug auf die Matrix des Zentrifugal- und des Coriolis-Terms des Roboters und/oder in Bezug auf die viskosen Reibungen sind.

16. Verfahren zur Kollisionserkennung nach einem der vorhergehenden Ansprüche, bei welchem eine nichtlineare Funktion die Zeichenfunktion oder die Exponentialfunktion oder die Absolutwertfunktion ist.

17. Verfahren zur Kollisionserkennung nach Anspruch 16, bei welchem die parametrischen Unsicherheiten, welche mit dem Zeichen der Gelenksgeschwindigkeit des Roboters verbunden sind, Unsicherheiten in Bezug auf trockene Reibungen sind.

18. Computerprogramm, beinhaltend Anweisungen zur Ausführung des Verfahrens zur Kollisionserkennung nach einem der Ansprüche 1 bis 17, wenn das Programm von einem Prozessor ausgeführt wird.

19. Aufzeichnungsträger, welcher durch einen Prozessor lesbar ist, auf welchem ein Programm aufgezeichnet ist, welches Anweisungen zur Ausführung des Verfahrens zur Kollisionserkennung nach einem der Ansprüche 1 bis 17 beinhaltet, wenn das Programm von einem Prozessor ausgeführt wird.

20. Steuerungssystem (400) eines Roboters (500), beinhaltend ein Steuerorgan (401) für die Handhabung des Roboters (500), eine Schnittstelle (402) für den Austausch von Informationen über den Zustand des Roboters (500) und ein Modul (403) zur Erkennung von Kollisionen, welches zur Umsetzung des Verfahrens nach einem der Ansprüche 1 bis 17 geeignet ist.

**Claims**

1. A method of detecting collision between a robot composed of a plurality of bodies linked together by at least one articulation and its environment, said method comprising the following steps:

- generating (100), on the basis of a dynamic model of the robot, a signal representative of collisions between the robot and its environment, said signal being called a residual r and comprising as many components as articulations of the robot,

said method being **characterized in that** it furthermore comprises the following steps:

- carrying out (104) an adaptive high-pass filtering of the residual r so as to render the residual independent of parametric or non-parametric uncertainties related to low-frequency phenomena,
- determining (105), in a recursive manner, an adaptive threshold T composed of at least one first dynamic term $T_{\Delta 1}$ equal to an item of information regarding the parametric uncertainties between said model and the real behavior of the robot, said parametric uncertainties being related to a first variable $e_i$ characteristic of the state of said robot from among the following variables: the position, the velocity or the acceleration of an articulation of the robot, or a linear or nonlinear function of one of these variables or of a combination of these variables,
- comparing (106) the filtered residual with the adaptive threshold T so as to deduce therefrom the existence or otherwise of a collision.

2. The method of detecting collision as claimed in claim 1, in which said adaptive threshold T is composed of the sum of several dynamic terms $T_{\Delta 1}$, $T_{\Delta 2}$, $T_{\Delta 3}$, each equal to an item of information regarding the parametric uncertainties between said model and the real behavior of the robot, said parametric uncertainties being related to a different variable, characteristic of the state of said robot from among the following variables: the position, the velocity or the acceleration of a fixed point of the robot, or a linear or nonlinear function of one of these variables or of a combination of these variables,

3. The method of detecting collision as claimed in one of the preceding claims, in which said adaptive threshold T furthermore comprises a static term $T_{static}$ configured so as to be greater than a measurement noise level.

4. The method of detecting collision as claimed in one of the preceding claims in which the filtering step (104) is carried out by means of a recursive least squares algorithm.

5. The method of detecting collision as claimed in claim 4, in which the filtering step (104) comprises the following sub-steps:

   - estimating (201), in a recursive manner, the coefficients of the transfer function of the high-pass filter $G_0^{-1}$,
   - filtering (202) the residual r with the estimated high-pass filter.

6. The method of detecting collision as claimed in either of claims 4 and 5, in which an additional step of temporal filtering (203) is applied to the filtered residual for each of its components.

7. The method of detecting collision as claimed in claim 6, in which the additional step of temporal filtering (203) is a step of root mean square (RMS) calculation.

8. The method of detecting collision as claimed in one of the preceding claims, in which the step (105) of determining at least one first dynamic term $T_{\Delta 1}$, $T_{\Delta 2}$, $T_{\Delta 3}$ of the adaptive threshold T is carried out by means of a recursive least squares algorithm.

9. The method of detecting collision as claimed in one of the preceding claims, in which the step (105) of determining at least one first dynamic term $T_{\Delta 1}$, $T_{\Delta 2}$, $T_{\Delta 3}$ of the adaptive threshold T comprises the following sub-steps:

   - estimating (211,212,213), in a recursive manner, the coefficients of the transfer function $\Delta_i$ modeling the parametric uncertainties related to said first variable $e_i$ characteristic of the state of said robot,
   - filtering (221,222,223) said first variable $e_i$ characteristic of the state of said robot with a filter of transfer function $\Delta_i$ estimated in the previous step (211,212,213) so as to obtain a dynamic term $T_{\Delta 1}$, $T_{\Delta 2}$, $T_{\Delta 3}$ of the adaptive threshold T.

10. The method of detecting collision as claimed in either of claims 8 and 9, in which an additional step of temporal filtering (231,232,233) is applied to said dynamic term $T_{\Delta 1}$, $T_{\Delta 2}$, $T_{\Delta 3}$ of the adaptive threshold T for each of its components.

11. The method of detecting collision as claimed in claim 10, in which the additional step of temporal filtering (231,232,233) is a step of root mean square (RMS) calculation.

12. The method of detecting collision as claimed in one of the preceding claims, in which step (106) of comparing the filtered residual with the adaptive threshold T so as to deduce therefrom the existence or otherwise of a collision comprises the following sub-steps:

   - comparing, for each articular component, the filtered residual with the adaptive threshold T,
   - concluding the existence of a collision if, for at least K components, the filtered residual is greater than the adaptive threshold T, K being a strictly positive predetermined integer less than or equal to the number of articulations of the robot.

**13.** The method of detecting collision as claimed in one of the preceding claims, in which step (100) of generating the residual consists of the following sub-steps:

- determining (101), on the basis of an item of information regarding the state of the robot and by way of a dynamic model, an estimation of the articular torques of the robot,
- performing a measurement (102) of the state of the robot, for example a measurement of the articular torques,
- calculating (103) the residual as the difference between the estimation and the measurement of the state of the robot.

**14.** The method of detecting collision as claimed in one of the preceding claims, in which the parametric uncertainties related to the articular acceleration of the robot are uncertainties regarding the inertia matrix of the robot.

**15.** The method of detecting collision as claimed in one of the preceding claims, in which the parametric uncertainties related to the articular velocity of the robot are uncertainties regarding the matrix of the centrifugal and Coriolis terms of the robot and/or regarding the viscous frictions.

**16.** The method of detecting collision as claimed in one of the preceding claims, in which a nonlinear function is the sign function or the exponential function or the absolute value function.

**17.** The method of detecting collision as claimed in claim 16, in which the parametric uncertainties related to the sign of the articular velocity of the robot are uncertainties regarding the dry frictions.

**18.** A computer program comprising instructions for the execution of the method of detecting collision as claimed in any one of claims 1 to 17, when the program is executed by a processor.

**19.** A recording medium readable by a processor on which is recorded a program comprising instructions for the execution of the method of detecting collision as claimed in any one of claims 1 to 17, when the program is executed by a processor.

**20.** A system (400) for command of a robot (500) comprising a control member (401) for the manipulation of the robot (500), an interface (402) for the exchange of information regarding the state of the robot (500) and a module (403) for detecting collisions which is adapted for implementing the method as claimed in one of claims 1 to 17.

FIG.1

FIG.3

FIG.2

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FRANK P M et al.** SURVEY OF ROBUST RESIDUAL GENERATION AND EVALUATION METHODS IN OBSERVER-BASED FAULT DETECTION SYSTEMS. *JOURNAL OF PROCESS CONTROL,* 01 Décembre 1997, vol. 7 (6), 403-424
- **V. VENKATASUBRAMANIAN ; R. RENGASWAMY ; K. YIN ; S. N. KAVURI.** A review of process fault détection and diagnosis: Part i: Quantitative model-based methods. *Computers Chemical Engineering,* 2003, 293-311
- **P. FRANK ; X. DING.** Survey of robust residual generation and evaluation methods in observer-based fault détection systems. *Journal of process control,* 1997, vol. 7 (6), 403-424
- **H. SNEIDER ; P. FRANK.** Observer-based supervision and fault détection in robots using nonlinear and fuzzy logic residual évaluation. *Control Systems Technology, IEEE Transactions on,* 1996, vol. 4 (3), 274-282
- Actuator failure détection and isolation using generalized momenta. **A. DE LUCA ; R. MATTONE.** Robotics and Automation, 2003. Proceedings. ICRA'03. IEEE International Conférence on. IEEE, 2003, vol. 1, 634-639
- Collision détection and reaction: A contribution to safe physical humanrobot interaction. **S. HADDADIN ; A. ALBU-SCHAFFER ; A. DE LUCA ; G. HIRZINGER.** Intelligent Robots and Systems, 2008. IROS 2008.IEEE/RSJ International Conférence on. IEEE, 2008, 3356-3363
- **W. DIXON ; I. WALKER ; D. DAWSON ; J. HARTRANFT.** Fault détection for robot manipulators with parametric uncertainty: a prediction-errorbased approach. *Robotics and Automation, IEEE Transactions on,* 2000, vol. 16 (6), 689-699
- An adapt-and-detect actuator fdi scheme for robot manipulators. **A. DE LUCA ; R. MATTONE.** Proceedings. ICRA'04. 2004 IEEE International Conférence on. IEEE, 2004, vol. 5, 4975-4980